(19) **Europäisches Patentamt / European Patent Office / Office européen des brevets**

(11) **EP 3 915 822 A1**

(12) # DEMANDE DE BREVET EUROPEEN

(43) Date de publication:
**01.12.2021 Bulletin 2021/48**

(21) Numéro de dépôt: **21176306.5**

(22) Date de dépôt: **27.05.2021**

(51) Int Cl.:
*B60L 9/30* (2006.01)     *B60L 15/20* (2006.01)
*H02M 1/10* (2006.01)     *H02M 7/797* (2006.01)
*H02M 1/00* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **27.05.2020 FR 2005569**

(71) Demandeur: **ALSTOM Transport Technologies 93400 Saint-Ouen (FR)**

(72) Inventeur: **CYPERS, David 65310 ODOS (FR)**

(74) Mandataire: **Lavoix 2, place d'Estienne d'Orves 75441 Paris Cedex 09 (FR)**

(54) **PROCÉDÉ D'ALIMENTATION D'UN ENSEMBLE DE MOTEURS DE TRACTION EMBARQUÉ DANS UN VÉHICULE, DISPOSITIF ÉLECTRONIQUE DE CONTRÔLE D'ALIMENTATION ET ENSEMBLE DE MOTEURS DE TRACTION ASSOCIÉ**

(57)     Procédé d'alimentation d'un ensemble (10) de moteurs de traction comprenant un premier et un deuxième moteurs de traction (11, 12) et un premier et un deuxième onduleurs (21, 22), comprenant les étapes suivantes :
- dans un premier mode, une première tension d'alimentation continue étant fournie en entrée desdits premier et deuxième onduleurs, alimenter le premier moteur par le signal provenant du premier onduleur et alimenter le deuxième moteur par le signal provenant du deuxième onduleur ;
- dans le deuxième mode d'alimentation, déconnecter électriquement le deuxième moteur du deuxième onduleur, commander le deuxième onduleur pour qu'il fonctionne en redresseur ; ledit deuxième onduleur étant alimenté par une deuxième tension d'alimentation;
- fournir au premier onduleur la tension redressée fournie par ledit deuxième onduleur fonctionnant en redresseur et alimenter le premier moteur par le signal alternatif délivré par le premier onduleur.

EP 3 915 822 A1

**Description**

La présente invention concerne un procédé d'alimentation d'un ensemble de moteurs de traction comprenant au moins un premier et un deuxième moteurs de traction, un premier et un deuxième onduleurs et étant embarqué dans un véhicule mobile sous l'action dudit ensemble de moteurs de traction, ledit procédé comprenant les étapes suivantes commandées par un dispositif électronique de contrôle d'alimentation :

- déclencher l'alimentation dudit ensemble de moteurs de traction alternativement selon un premier et un deuxième modes d'alimentation ;
- dans le premier mode d'alimentation, fournir une tension d'alimentation continue en entrée desdits premier et deuxième onduleurs, alimenter le premier moteur par le signal alternatif délivré par le premier onduleur et alimenter le deuxième moteur par le signal alternatif délivré par le deuxième onduleur.

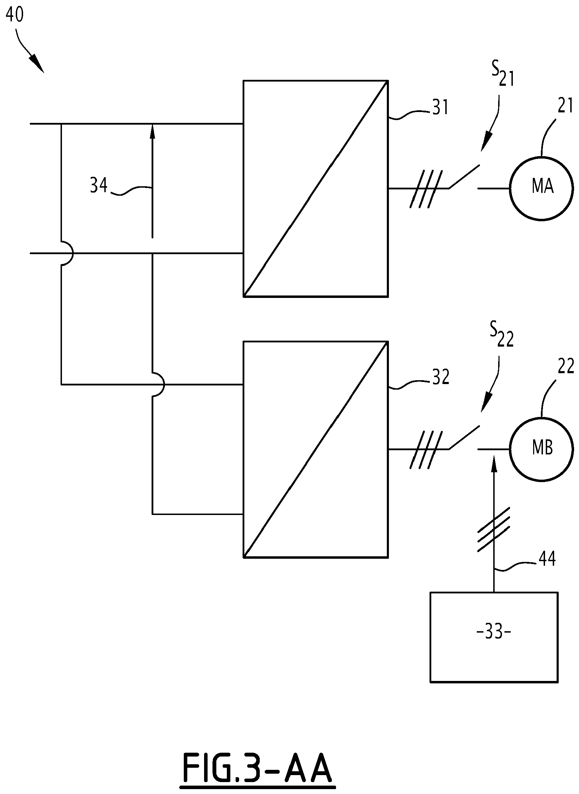

Considérons en référence à la figure 3 un ensemble 40 de moteurs de traction comprenant au moins un moteur de traction MA 21, un moteur de traction MB 22, un premier onduleur 31 et un deuxième onduleur 32. Cet ensemble 40 de moteurs de traction, par exemple embarqué dans un bogie d'un train (non représenté), est connu de l'art antérieur et est adapté pour déplacer le train par actionnement des roues du bogie sous l'effet de traction généré par les moteurs MA 21 et MB 22 alimentés par les onduleurs.

Les moteurs MA 21 et MB 22 sont par exemple des moteurs asynchrones.

Il est connu, dans le premier mode d'alimentation correspondant à l'alimentation par la caténaire lorsque le train circule sur les rails, de fermer des interrupteurs S21, S22 pour ainsi connecter électriquement respectivement la sortie du premier onduleur 31 au moteur MA 21 et la sortie du deuxième onduleur 32 au moteur MB 22. Dans un tel premier mode d'alimentation, la tension d'alimentation 34 est une tension continue fournie par la caténaire et appliquée en entrée de chacun des onduleurs 31, 31. Et selon l'art antérieur, dans un deuxième mode d'alimentation, lorsque le train n'est plus alimenté par la caténaire, mais qu'il doit aller stationner dans le dépôt par exemple, un deuxième mode d'alimentation est mis en place dans lequel l'ouverture des interrupteurs S21, S22 est commandée pour déconnecter le premier onduleur 31, respectivement le deuxième onduleur32, du moteur MA 21, respectivement MA 22. Dans ce deuxième mode d'alimentation, un seul moteur est suffisant pour déplacer le train jusqu'à son emplacement dans le dépôt et une tension d'alimentation 44 est appliquée directement en entrée du seul moteur MB 22. Elle est par exemple fournie par un bloc d'alimentation 33 installé au sol, par exemple dans le dépôt et comprenant généralement une source de tension continue et un onduleur.

Cette solution présente des inconvénients : si elle convient pour les moteurs asynchrones, elle ne peut toutefois être utilisée dans tous les cas ; notamment elle ne convient pas dans le cas des moteurs à aimant permanent, puisque l'alimentation d'un tel moteur nécessite le pilotage des onduleurs l'alimentant en fonction d'une mesure de position ou de vitesse du train souvent intégrée dans les onduleurs embarqués.

Dans ce contexte, la présente invention vise à proposer une solution alternative d'alimentation.

A cet effet, suivant un premier aspect, l'invention propose un procédé d'alimentation d'un ensemble de moteurs de traction du type précité caractérisé en ce qu'il comprend les étapes suivantes pilotées par le dispositif électronique de contrôle d'alimentation, dans le deuxième mode d'alimentation :

- déconnecter électriquement le deuxième moteur du deuxième onduleur ;
- commander le deuxième onduleur pour qu'il fonctionne en redresseur ; ledit deuxième onduleur fonctionnant en redresseur étant alimenté par une deuxième tension d'alimentation;
- fournir au premier onduleur la tension redressée fournie par ledit deuxième onduleur fonctionnant en redresseur et alimenter le premier moteur par le signal alternatif délivré par le premier onduleur.

L'invention permet ainsi de fournir une solution alternative d'alimentation dans le deuxième mode d'alimentation, qui est applicable également au cas des ensembles de moteurs à aimants permanents, aisée à mettre en oeuvre et qui présente en outre l'avantage de ne pas avoir à fournir un onduleur dédié externe pour alimenter les moteurs : les onduleurs embarqués sont réutilisés pour alimenter les moteurs, ainsi qu'une alimentation externe (400V triphasé par exemple).

Dans des modes de réalisation, le procédé d'alimentation d'un ensemble de moteurs de traction suivant l'invention comporte en outre une ou plusieurs des caractéristiques suivantes :

- le deuxième mode d'alimentation est déclenché en réception d'une commande de mise au dépôt du véhicule ;
- dans le deuxième mode d'alimentation, la deuxième tension d'alimentation provient d'une source extérieure au véhicule et disposée dans le dépôt ou à proximité du dépôt ;
- dans le deuxième mode d'alimentation, le pilotage du premier onduleur correspond à une vitesse maximum du moteur limitée à quelques centaines de RPM ;
- le véhicule est un véhicule circulant sur deux rails et dans le premier mode d'alimentation, la première tension d'alimentation continue fournie provient d'une caténaire ou d'un troisième rail auquel le véhicule est relié électriquement ;

- le premier moteur de traction est un moteur à aimant permanent ;

Suivant un deuxième aspect, la présente invention propose un dispositif électronique de contrôle d'alimentation d'un ensemble de moteurs de traction comprenant au moins un premier et un deuxième moteurs de traction et un premier et un deuxième onduleurs, ledit dispositif de contrôle d'alimentation étant adapté pour être embarqué, avec l'ensemble de moteurs de traction, dans un véhicule adapté pour se déplacer sous l'effet dudit ensemble de moteurs de traction
ledit dispositif électronique de contrôle d'alimentation étant adapté pour déclencher l'alimentation dudit ensemble de moteurs de traction alternativement selon un premier et un deuxième modes d'alimentation, pour, dans le premier mode d'alimentation, une première tension d'alimentation continue étant fournie en entrée desdits premier et deuxième onduleurs, commander l'alimentation du premier moteur par le signal alternatif délivré par le premier onduleur et l'alimentation du deuxième moteur par le signal alternatif délivré par le deuxième onduleur ; ledit dispositif électronique de contrôle d'alimentation étant caractérisé en ce qu'il est adapté pour, dans le deuxième mode d'alimentation, commander la déconnection électriquement entre le deuxième moteur et le deuxième onduleur, pour commander le deuxième onduleur pour qu'il fonctionne en redresseur, ledit deuxième onduleur fonctionnant en redresseur étant alimenté par une deuxième tension d'alimentation, et pour commander la fourniture au premier onduleur de la tension redressée fournie par ledit deuxième onduleur fonctionnant en redresseur et pour commander l'alimentation du premier moteur par le signal alternatif délivré par le premier onduleur.

Suivant un troisième aspect, la présente invention propose un ensemble de moteurs de traction comprenant au moins un premier et un deuxième moteurs de traction, un premier et un deuxième onduleurs et ledit dispositif de contrôle d'alimentation suivant le deuxième aspect de l'invention, ledit ensemble de moteurs de traction étant adapté pour être embarqué dans un véhicule adapté pour se déplacer sous l'effet dudit ensemble de moteurs de traction.

Dans des modes de réalisation dudit ensemble de moteurs de traction :

- dans le deuxième mode d'alimentation, le pilotage du premier onduleur correspond à une vitesse maximum du moteur limitée à quelques centaines de RPM ; et/ou
- le premier moteur de traction est un moteur à aimant permanent.

Ces caractéristiques et avantages de l'invention apparaîtront à la lecture de la description qui va suivre, donnée uniquement à titre d'exemple, et faite en référence aux dessins annexés, sur lesquels :

[Fig 1] la figure 1 représente une vue d'un ensemble de moteurs de traction embarqué dans un mode de réalisation de l'invention ;
[Fig 2] la figure 2 est un organigramme d'étapes mises en œuvre dans un mode de réalisation de l'invention ;
[Fig 3] la figure 3 représente une vue d'un ensemble de moteurs de traction embarqué dans l'art antérieur.

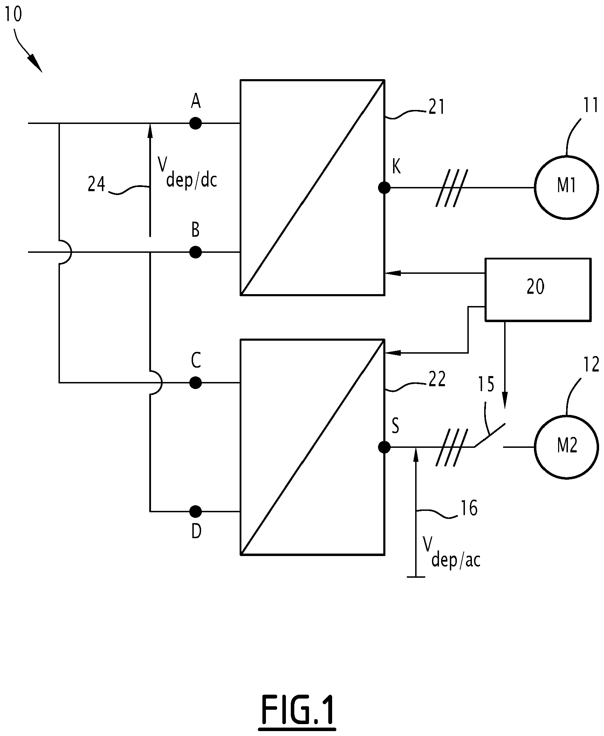

La figure 1 représente un ensemble 10 de moteurs de traction dans un mode de réalisation de l'invention, comprenant au moins deux moteurs de traction M1 11, M2 12, deux onduleurs 21, 22, au moins un interrupteur 15 et un dispositif électronique de contrôle d'alimentation 20.

L'ensemble 10, par exemple embarqué dans un bogie d'un train (non représenté), est adapté pour entraîner les roues du bogie reliées aux moteurs.

L'onduleur 21 comporte des bornes d'entrée/sortie A, B, K et est raccordé, par la borne K, au moteur M1 11, par exemple aux enroulements de stator du moteur M1.

L'onduleur 22 comporte des bornes d'entrée/sortie C, D et S et est raccordé, par sa borne S, via l'interrupteur 15 commandable en ouverture et fermeture, au moteur M2 12, par exemple aux enroulements de stator du moteur M2.

Les moteurs M1, M2 sont par exemple des moteurs à aimants permanents, triphasés.

Le dispositif électronique de contrôle d'alimentation 20 est adapté pour piloter les onduleurs 21, 22, les moteurs M1, M2 et la fermeture et l'ouverture de l'interrupteur 15, de la manière décrite ci-dessous.

L'ensemble 10 est adapté pour fonctionner selon au moins deux modes d'alimentation distincts.

Dans un premier mode d'alimentation, le train effectue des trajectoires de service opérationnel, circule sur deux rails d'une voie ferrée et reçoit alors une tension d'alimentation, nommée ici Vdc, via un organe de captage, tel un pantographe ou un patin d'alimentation, relié à une ligne aérienne d'alimentation ou à un troisième rail.

Cette tension d'alimentation Vdc est alors appliquée en entrée des bornes d'entrée/sortie de chacun des onduleurs 21, 22, donc entre les bornes A et B, et entre les bornes C et D.

Dans le premier mode, le dispositif électronique de contrôle d'alimentation 20 est adapté pour commander une position fermée de l'interrupteur 15 connectant ainsi la borne S au moteur M2 12 et pour commander et piloter un fonctionnement appelé ici « standard 1 » des onduleurs 21, 22.

Dans ce fonctionnement « standard 1 » ainsi commandé, en tant qu'onduleurs, sous le pilotage du dispositif électronique de contrôle d'alimentation 20, les onduleurs 21, 22 sont alors adaptés pour, à partir de la tension d'alimentation continue Vdc qui leur est fournie en entrée, générer des formes d'ondes découpées qui sont délivrées respectivement au moteur M1 11 par l'onduleur 21, via sa borne K, et au moteur M2 12 par l'onduleur 22 via sa borne S, alimentant ainsi le moteur M2 12.

Les caractéristiques définissant la tension variable ainsi délivrée à chaque moteur sont fonction des commandes, par exemple de type Modulation de Largeur d'Impulsion, transmises aux onduleurs 21, 22 par le dispositif de contrôle d'alimentation 20.

La tension d'alimentation Vdc est par exemple continue et est comprise entre 1000 et 3000 Volts (V), par exemple. La vitesse des moteurs M1 et M2 dans le premier mode d'alimentation est par exemple comprise dans la plage 0 à 6000 RPM (« Rotation Per Minute »). En variante la tension d'alimentation Vdc est une tension alternative.

Dans un deuxième mode d'alimentation correspondant à une situation dans laquelle le train n'est plus alimenté via la ligne aérienne ou via le troisième rail (par exemple, lorsque le train doit aller rejoindre une place de stationnement dans un dépôt ferroviaire), le dispositif électronique de contrôle d'alimentation 20 est adapté pour commander une position ouverte de l'interrupteur 15 déconnectant ainsi du moteur M2 12 la borne S de l'onduleur 22, pour commander un fonctionnement nommé ici « standard 2 » à l'onduleur 21, i.e. en tant qu'onduleur et pour commander un fonctionnement nommé ici « inverse », i.e. en tant que redresseur, à l'onduleur 22.

Dans ce fonctionnement « inverse » ainsi commandé, l'onduleur 22 est alors adapté pour fonctionner en redresseur, et ainsi à partir d'une tension d'alimentation variable Vdep/ac (flèche 16) qui lui est appliquée sur sa borne S, pour redresser la tension Vdep/ac et générer une tension continue qui est délivrée entre ses bornes C et D, nommée Vdep/dc (flèche 24), sous le pilotage du dispositif électronique de contrôle d'alimentation 20.

La tension d'alimentation Vdep/ac est par exemple triphasée alternative et par exemple de fréquence F comprise entre 50Hz et 60Hz et d'amplitude A comprise entre 380V et 480V (par exemple, une tension comprise entre 380V et440V pour 50Hz ou entre 380V et 480V pour 60Hz. Dans un mode de réalisation, elle est fournie par une source électrique présente dans le dépôt ou à proximité du dépôt (par exemple à distance inférieure à 100 m), par exemple reliée à l'onduleur 22 par un feeder. La source électrique est par exemple une source standard alimentée par un réseau électrique standard.

La tension d'alimentation Vdep/dc est continue ; son intensité dépend de la valeur redressée de la tension d'alimentation, donc dans l'exemple considéré est au minimum $380V \times \sqrt{2}$ (l'onduleur peut aussi fonctionner en PTCF (Pont Triphasé à Commutation forcée) pour élever la tension du bus à une valeur quelconque souhaitée).

Vdep/dc est par exemple égale à $\sqrt{2.V}$ si Vdep/ac est de forme Vsin $\varphi$

Dans ce fonctionnement « standard 2 » ainsi commandé, l'onduleur 21 est adapté, en tant qu'onduleur, pour appliquer une fonction d'onduleur à la tension continue Vdep/dc (flèche 24) qui lui est fournie en entrée, entre ses bornes A et B, et pour générer alors des formes d'ondes découpées qui sont délivrées au moteur M1 11 par l'onduleur 21 via sa borne K.

Les caractéristiques définissant la tension variable ainsi délivrée au moteur sont fonction de la tension d'entrée Vdep/dc et des commandes, par exemple de type Modulation de Largeur d'Impulsion, transmises à l'onduleur 21 par le dispositif de contrôle d'alimentation 20.

Dans ce fonctionnement « standard 2 », l'onduleur 21 est en outre commandé par le dispositif de contrôle d'alimentation 20, par exemple par rétro-contrôle, pour que la vitesse du moteur M1 11 demeure inférieure à une vitesse maximum VM, vitesse maximum du moteur limitée à quelques centaines de RPM (par exemple inférieure à 500 RPM, ou inférieure à 1000 RPM), correspondant par exemple à une vitesse inférieure à 10 km/h.

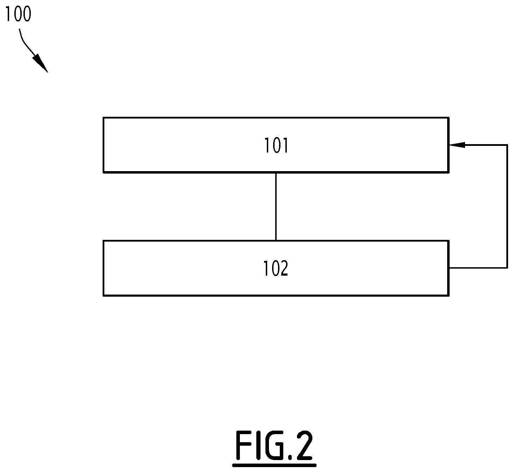

En référence à la figure 2, les étapes 101, 102 d'un procédé 100 mises en œuvre dans un mode de réalisation de l'invention sont maintenant décrites.

Dans une étape 101, un premier mode d'alimentation a été déclenché, le dispositif électronique de contrôle d'alimentation 20 commande une position fermée de l'interrupteur 1 ; la tension d'alimentation Vdc, reçue via l'organe da captage depuis par exemple une ligne d'alimentation aérienne est appliquée entre les bornes A et B, et entre les bornes C et D des onduleurs 21, 22 et le dispositif électronique de contrôle d'alimentation 20 commande un fonctionnement « standard 1 » des onduleurs 21, 22. Le train effectue ses trajectoires de service opérationnel en circulant sur deux rails d'une voie ferrée.

Dans ce fonctionnement « standard 1 », les onduleurs 21, 22 alimentent les moteurs M1, M2 respectivement en tension alternative, ce qui entraînent les roues du bogie.

Dès que le dispositif électronique de contrôle d'alimentation 20 reçoit une commande de passage dans le deuxième mode d'alimentation, par exemple pour effectuer un stationnement au dépôt, dans une étape 102, il commande une position ouverte de l'interrupteur 15, un basculement en fonctionnement « standard 2 » de l'onduleur 21 et un basculement en redresseur de l'onduleur 22. Une tension d'alimentation variable Vdep/ac (flèche 16) fournie par une source électrique disposée dans le dépôt, est appliquée sur la borne S de l'onduleur 22, piloté en redresseur par le dispositif électronique de contrôle d'alimentation 20 ; la tension redressée résultante Vdep/dc (flèche 24) est ainsi appliquée entre les bornes A et B, pour générer alors des formes d'ondes découpées qui sont délivrées au moteur M1 11 par l'onduleur 21 via sa borne K. L'onduleur 21 est piloté par le dispositif de contrôle d'alimentation 20 de sorte que la vitesse du moteur M1 11 demeure inférieure à la vitesse maximum VM.

Dès que le dispositif électronique de contrôle d'alimentation 20 reçoit une commande de passage dans le deuxième mode d'alimentation, par exemple pour effectuer un stationnement au dépôt, l'étape 102 est réitérée.

Dès que le dispositif électronique de contrôle d'alimentation 20 reçoit une commande de passage dans le premier mode d'alimentation, par exemple pour quitter le dépôt et être alimenté par une ligne aérienne de contact, l'étape 101 est réitérée.

L'invention propose ainsi une solution d'alimentation utilisant les deux onduleurs embarqués dans la chaîne d'alimentation d'un seul des deux moteurs considérés, permettant au train de se rendre au dépôt, ou d'effectuer tout autre type de déplacement avec une alimentation autre que la ligne d'alimentation usuelle, qui est en outre tout à fait adaptée aux moteurs à aimants permanents notamment, qui ne nécessite pas l'usage d'un onduleur dédié au sol pour déplacer le train jusqu'au dépôt.

Dans un mode de réalisation, dans le deuxième mode d'alimentation, l'onduleur 22 est utilisé en outre en tant que PTCF (Pont Triphasé à Commutation Forcée) par le dispositif de contrôle d'alimentation 20 qui est adapté pour le piloter comme tel, si nécessaire, pour augmenter la tension

Dans un mode de réalisation, le basculement du premier mode d'alimentation au deuxième ou vice-versa est déclenché suite à une commande de basculement correspondante reçue par le dispositif de contrôle d'alimentation 20, ou encore en variante suite à la détection de la présence d'une tension d'alimentation au niveau de la caténaire ou du troisième rail (basculement vers le premier mode) ou à la détection de la connexion du train et notamment de l'onduleur 22 à une source d'alimentation présente dans le dépôt ou à proximité du dépôt (basculement vers le deuxième mode).

Dans le mode de réalisation décrit ci-dessus, le dispositif de commande 20 était embarqué dans le véhicule. Dans un autre mode de réalisation, le dispositif de commande se trouve à l'extérieur du véhicule et comporte des moyens de télécommunication, par exemple pour piloter les basculements de mode à distance.

Le véhicule considéré ci-dessus est un train, toutefois l'invention peut être mise en œuvre dans des véhicules mobiles autres, tel que tramways, métros ...

## Revendications

1. Procédé d'alimentation d'un ensemble (10) de moteurs de traction comprenant au moins un premier et un deuxième moteurs de traction (11, 12) et un premier et un deuxième onduleurs (21, 22), l'ensemble de moteurs de traction étant embarqué dans un véhicule mobile sous l'action dudit ensemble de moteurs de traction, ledit procédé comprenant les étapes suivantes pilotées par un dispositif électronique de contrôle d'alimentation (20) :

   - déclencher l'alimentation dudit ensemble de moteurs de traction (11, 12) alternativement selon un premier et un deuxième modes d'alimentation ;
   - dans le premier mode d'alimentation, une première tension d'alimentation continue étant fournie en entrée desdits premier et deuxième onduleurs, alimenter le premier moteur par le signal alternatif délivré par le premier onduleur et alimenter le deuxième moteur par le signal alternatif délivré par le deuxième onduleur ;

   ledit procédé étant **caractérisé en ce qu'**il comprend les étapes suivantes pilotées par le dispositif électronique de contrôle d'alimentation (20), dans le deuxième mode d'alimentation :

   - déconnecter électriquement le deuxième moteur du deuxième onduleur ;
   - commander le deuxième onduleur pour qu'il fonctionne en redresseur ; ledit deuxième onduleur fonctionnant en redresseur étant alimenté par une deuxième tension d'alimentation;
   - fournir au premier onduleur la tension redressée fournie par ledit deuxième onduleur fonctionnant en redresseur et alimenter le premier moteur par le signal alternatif délivré par le premier onduleur.

2. Procédé d'alimentation d'un ensemble de moteurs de traction (11, 12, 21, 22) embarqué selon la revendication 1, selon lequel le deuxième mode d'alimentation est déclenché en réception d'une commande de mise au dépôt du véhicule.

3. Procédé d'alimentation d'un ensemble de moteurs de traction embarqué selon la revendication 2, selon lequel dans le deuxième mode d'alimentation, la deuxième tension d'alimentation provient d'une source extérieure au véhicule et disposée dans le dépôt ou à proximité du dépôt.

4. Procédé d'alimentation d'un ensemble (10) de moteurs de traction (11, 12) embarqué selon l'une des revendications précédentes, selon lequel dans le deuxième mode d'alimentation, le pilotage du premier onduleur (21) correspond à une vitesse maximum du moteur limitée à quelques centaines de RPM.

5. Procédé d'alimentation d'un ensemble (10) de moteurs de traction (11, 12) embarqué selon l'une des revendications précédentes, selon lequel le véhicule est un véhicule circulant sur deux rails et dans le premier mode d'alimentation, la première tension d'alimentation continue fournie provient d'une caténaire ou d'un troisième rail auquel le véhicule est relié électriquement.

6. Procédé d'alimentation d'un ensemble (10) de moteurs de traction embarqué selon l'une des revendications précédentes, selon lequel le premier moteur de traction (11) est un moteur à aimant permanent.

7. Dispositif électronique de contrôle d'alimentation (20) d'un ensemble (10) de moteurs de traction comprenant au moins un premier et un deuxième moteurs de traction (11, 12) et un premier et un deuxième onduleurs (21, 22), ledit dispositif de contrôle d'alimentation étant adapté pour être embarqué, avec l'ensemble (10) de moteurs de traction, dans un véhicule adapté pour se déplacer sous l'effet dudit ensemble de moteurs de traction

ledit dispositif électronique de contrôle d'alimentation (20) étant adapté pour déclencher l'alimentation dudit ensemble de moteurs de traction (11, 12) alternativement selon un premier et un deuxième modes d'alimentation, pour, dans le premier mode d'alimentation, une première tension d'alimentation continue étant fournie en entrée desdits premier et deuxième onduleurs, commander l'alimentation du premier moteur par le signal alternatif délivré par le premier onduleur et l'alimentation du deuxième moteur par le signal alternatif délivré par le deuxième onduleur ;

    - ledit dispositif électronique de contrôle d'alimentation (20) étant **caractérisé en ce qu'**il est adapté pour, dans le deuxième mode d'alimentation, commander la déconnection électrique entre le deuxième moteur et le deuxième onduleur, pour commander le deuxième onduleur pour qu'il fonctionne en redresseur, ledit deuxième onduleur fonctionnant en redresseur étant alimenté par une deuxième tension d'alimentation, et pour commander la fourniture au premier onduleur de la tension redressée fournie par ledit deuxième onduleur fonctionnant en redresseur et pour commander l'alimentation du premier moteur par le signal alternatif délivré par le premier onduleur.

8. Ensemble (10) de moteurs de traction comprenant au moins un premier et un deuxième moteurs de traction (11, 12), un premier et un deuxième onduleurs (21, 22) et ledit dispositif de contrôle d'alimentation selon la revendication 7, ledit ensemble de moteurs de traction étant adapté pour être embarqué dans un véhicule adapté pour se déplacer sous l'effet dudit ensemble de moteurs de traction.

9. Ensemble (10) de moteurs de traction selon la revendication 9, dans lequel, dans le deuxième mode d'alimentation, le pilotage du premier onduleur (21) correspond à une vitesse maximum du moteur limitée à quelques centaines de RPM.

10. Ensemble (10) de moteurs de traction selon l'une des revendications 8 et 9, dans lequel le premier moteur de traction (11) est un moteur à aimant permanent.

10

A

21

$V_{dep/dc}$

24

B

K

M1

11

20

C

22

15

S

12

D

M2

16

$V_{dep/ac}$

## FIG.1

100

101

102

## FIG.2

40

34

S21

31

21

MA

S22

32

22

MB

44

-33-

## FIG.3-AA

Europäisches
Patentamt

European
Patent Office

Office européen
des brevets

## RAPPORT DE RECHERCHE EUROPEENNE

Numéro de la demande

EP 21 17 6306

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2009 008549 A1 (BOMBARDIER TRANSP GMBH [DE]) 19 août 2010 (2010-08-19) * alinéas [0003] - [0041] * * alinéas [0060] - [0069]; figures 3-4 * * alinéas [0070] - [0074]; figures 5-6 * ----- | 1-10 | INV. B60L9/30 B60L15/20 H02M1/10 H02M7/797 |
| A | US 2019/241091 A1 (LEE JIN-HYUNG [KR] ET AL) 8 août 2019 (2019-08-08) * figures 1,3,11 * ----- | 1-10 | ADD. H02M1/00 |
| A | EP 2 671 748 A1 (HITACHI LTD [JP]) 11 décembre 2013 (2013-12-11) * figure 6 * ----- | 1-10 | |

DOMAINES TECHNIQUES
RECHERCHES (IPC)

B60L
H02M

Le présent rapport a été établi pour toutes les revendications

| Lieu de la recherche | Date d'achèvement de la recherche | Examinateur |
|---|---|---|
| La Haye | 22 octobre 2021 | Spicq, Alexandre |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

                      

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 17 6306

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-10-2021

| Document brevet cité au rapport de recherche | Date de publication | Membre(s) de la famille de brevet(s) | Date de publication |
|---|---|---|---|
| DE 102009008549 A1 | 19-08-2010 | DE 102009008549 A1 | 19-08-2010 |
| | | EP 2396188 A1 | 21-12-2011 |
| | | ES 2675094 T3 | 06-07-2018 |
| | | PL 2396188 T3 | 28-09-2018 |
| | | US 2011316333 A1 | 29-12-2011 |
| | | WO 2010091899 A1 | 19-08-2010 |
| US 2019241091 A1 | 08-08-2019 | DE 102019201661 A1 | 08-08-2019 |
| | | KR 20190096127 A | 19-08-2019 |
| | | US 2019241091 A1 | 08-08-2019 |
| EP 2671748 A1 | 11-12-2013 | AU 2012212816 A1 | 05-09-2013 |
| | | BR 112013019259 A2 | 11-10-2016 |
| | | CN 103338967 A | 02-10-2013 |
| | | EP 2671748 A1 | 11-12-2013 |
| | | ES 2587723 T3 | 26-10-2016 |
| | | JP 5548280 B2 | 16-07-2014 |
| | | JP 5918788 B2 | 18-05-2016 |
| | | JP 2014140294 A | 31-07-2014 |
| | | JP WO2012105282 A1 | 03-07-2014 |
| | | KR 20130100013 A | 06-09-2013 |
| | | PL 2671748 T3 | 30-11-2016 |
| | | US 2013313059 A1 | 28-11-2013 |
| | | WO 2012105282 A1 | 09-08-2012 |

EPO FORM P0460

Pour tout renseignement concernant cette annexe : voir Journal Officiel de l'Office européen des brevets, No.12/82